# EUROPEAN PATENT SPECIFICATION

(11) **EP 3 150 501 B1**
(45) Date of publication and mention of the grant of the patent: **29.04.2020**
(21) Application number: 15800641.1
(22) Date of filing: 24.03.2015
(51) Int. Cl.: B65D 1/02, B65D 1/32, B65D 83/00, B29C 49/24, B29C 49/36

(54) **LAMINATED RELEASE CONTAINER AND METHOD FOR MANUFACTURING SAME**
LAMINIERTER FREISETZUNGSBEHÄLTER UND VERFAHREN ZUR HERSTELLUNG DAVON
RÉCIPIENT DÉTACHABLE STRATIFIÉ ET PROCÉDÉ DE FABRICATION ASSOCIÉ

(30) Priority: 29.05.2014 JP 2014111287
(43) Date of publication of application: 05.04.2017
(73) Proprietor: Kyoraku Co., Ltd., Kyoto-shi, Kyoto 602-0912 (JP)
(72) Inventor: EGUCHI, Tetsuaki, Yamato-shi Kanagawa 242-0018 (JP)
(74) Representative: Gulde & Partner
(86) International application number: PCT/JP2015/058878
(87) International publication number: WO 2015/182230

(56) References cited:
- JP-A- H0 672 422
- JP-A- H0 672 422
- JP-A- H0 880 929
- JP-A- H0 880 929
- JP-A- 2001 114 328
- JP-A- 2010 064 454
- JP-A- 2010 064 454
- JP-A- 2011 116 082
- JP-A- 2011 116 082
- JP-A- 2013 043 649
- JP-A- 2013 043 649
- JP-A- 2014 005 003
- JP-A- 2014 005 003
- JP-A- 2014 083 813
- JP-A- 2014 083 813
- JP-A- 2014 088 004
- JP-A- 2014 088 004

## Description

### Technical Field

The present invention relates to a delamination container and production method thereof.

### Background Art

There have been known delamination containers that each peel an inner layer from an outer layer and shrink the inner layer with reductions in contents and thus suppress the entry of air into the container (e.g., JP 3563172 B, JP H08-0080939 A, JP 2014-88004 A). Such a delamination container is typically molded by blow molding.
JP 2014-5003 A discloses a not-delaminatable container comprising a plurality of layers. The innermost layer which is in contact with the content of the container includes a lubricant to improve the slip-down characteristics of the contents stored in the container. Optionally, the outermost layer may also include a lubricant in order to improve the slip characteristic at the time of molding. For the same reason JP 2013 043649 A and JP H06-72422 A teach to add a lubricant in the outermost layer of the container.

### SUMMARY OF INVENTION

### Technical Problem

The present inventor investigated such delamination containers in detail and found that they may not have sufficient content dischargeability.

The present invention has been made in view of the foregoing, and an object thereof is to provide a delamination container having excellent content dischargeability.

### Solution to Problem

The present invention provides a delamination container including an outer layer and an inner layer. The inner layer is adapted to peel from the outer layer and to shrink with reductions in contents. The outer layer consists of multiple layers, and an innermost layer of the outer layer contains a lubricant.

The present inventor investigated the cause of the insufficient dischargeability of delamination containers and then found the following two causes. One of the causes is the insufficient peelability of the inner layer from the outer layer. The present inventor found that while delamination containers are configured to smoothly discharge contents by peeling the inner layer from the outer layer and shrinking the inner layer, ones that insufficiently peel the inner layer from the outer layer and thus insufficiently discharge contents may be produced depending on the production conditions or the like. The other cause is that delamination containers may be inadequately released from the mold. Specifically, the present inventor found: a delamination container typically has a relatively high temperature and a soft property when taken out from the mold; and if it is inadequately released, it may receive an excessive force and suffer unintended deformation and thus the dischargeability thereof may be affected.

Then, on the basis of the above findings, the present inventor found that it is possible to improve the content dischargeability of a delamination container by improving the peelability of the inner layer from the outer layer by adding a lubricant to the innermost layer of the outer layer. The present inventor then completed the present invention.

Various embodiments of the present invention are described below. The embodiments below can be combined with each other.

Preferably, the outer layer consists of multiple layers and includes a repro layer between the innermost and outermost layers.

Preferably, an outermost layer of the inner layer is formed of an EVOH resin, and the innermost layer of the outer layer contains the lubricant.

The present invention also provides a method for producing the above delamination container. The method includes a step of extruding a molten multilayer parison having a multilayer structure corresponding to a layer configuration of the delamination container and molding the molten multilayer parison by rotary blow molding. An outermost layer of the outer layer contains the lubricant.

### BRIEF DESCRIPTION OF DRAWINGS

Fig. 1 includes perspective views showing the structure of a delamination container 1 of one embodiment of the present invention, in which Fig. 1(a) is an overview; Fig. 1(b) is a bottom view; and Fig. 1 (c) is an enlarged view of the vicinity of a valve mounting recess 7a and shows a state in which a valve member 5 is detached.
Fig. 2 includes diagrams showing the delamination container 1 in Fig. 1, in which Fig. 2(a) is a front view; Fig. 2(b) is a rear view; Fig. 2(c) is a plan view; and Fig. 2(d) is a bottom view.
Fig. 3 is a sectional view taken along line A-A of Fig. 2(d). Note that Figs. 1 and 2 show a state before a bottom sealing protrusion 27 is bent and Fig. 3 shows a state after the bottom sealing protrusion 27 is bent.
Fig. 4 is an enlarged view of a region including an opening 9 in Fig. 3.
Fig. 5 shows a state in which the peel of an inner layer 13 has proceeded from the state shown in Fig. 4.
Fig. 6 includes enlarged views of a region including a bottom 29 shown in Fig. 3, in which Fig. 6(a) show a state before the bottom sealing protrusion 27 is bent; and Fig. 6(b) shows a state after the bottom sealing protrusion 27 is bent.
Fig. 7 is a sectional view showing the layer configuration of an outer layer 11 and an inner layer 13.
Fig. 8 is a perspective view showing various configurations of a valve member 5.
Fig. 9 includes diagrams showing steps for producing the delamination container 1 shown in Fig. 1.
Fig. 10 includes diagrams showing steps for producing the delamination container 1 in Fig. 1 following the steps shown in Fig. 9.
Fig. 11 includes diagrams showing another example of an inner layer preliminary peeling/outside air introduction hole formation step.
Fig. 12 includes diagrams showing the usage of the delamination container 1 shown in Fig. 1.
Fig. 13 is a diagram showing rotary blow molding.

### DETAILED DESCRIPTION

Now, an embodiment of the present invention will be described. Various features described in the embodiment below can be combined with each other. Inventions are established for the respective features.

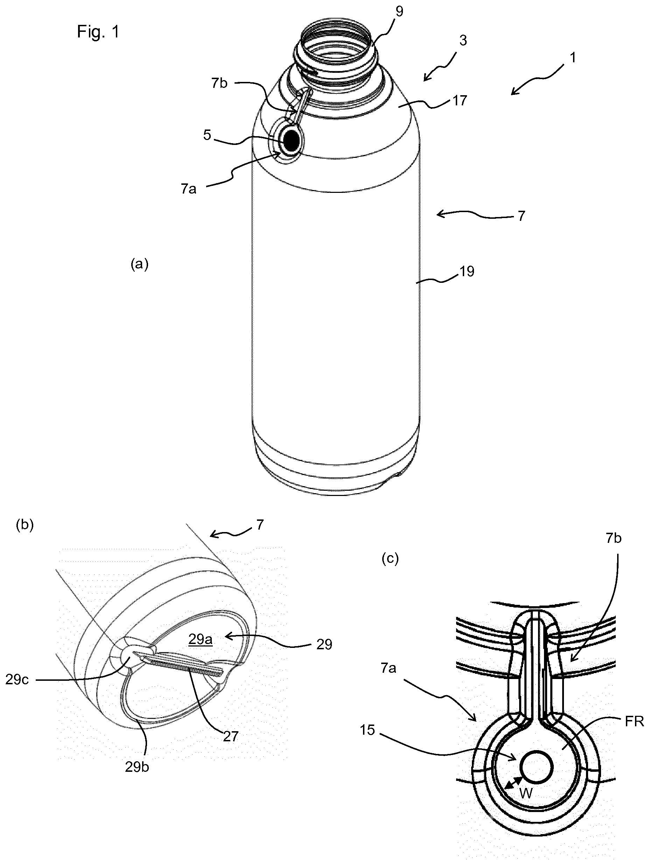

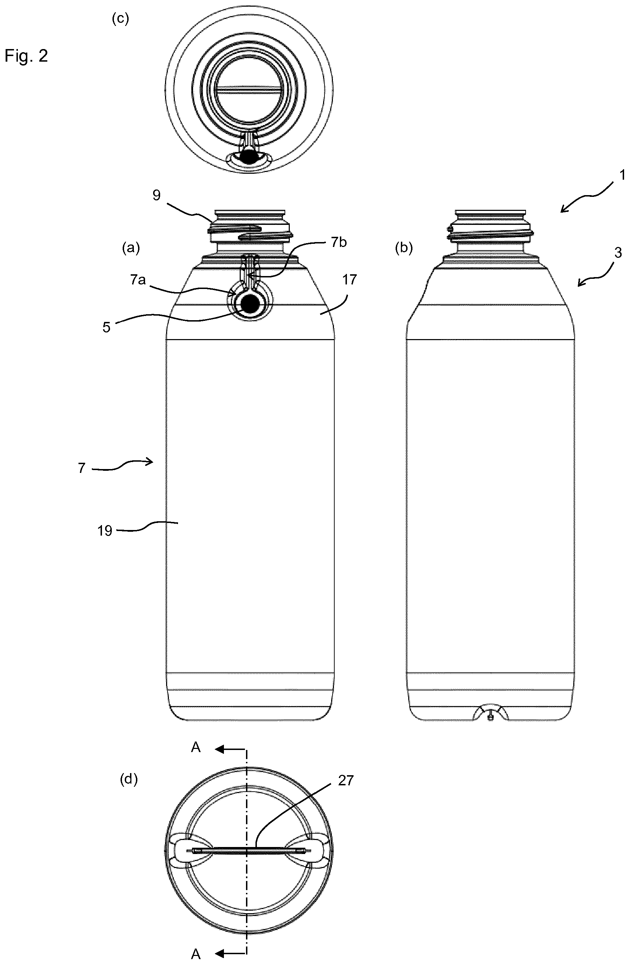

As shown in Figs. 1 and 2, a delamination container 1 of one embodiment of the present invention includes a container body 3 and a valve member 5. The container body 3 includes a containing part 7 containing contents and an opening 9 through which contents from the containing part 7 are discharged.

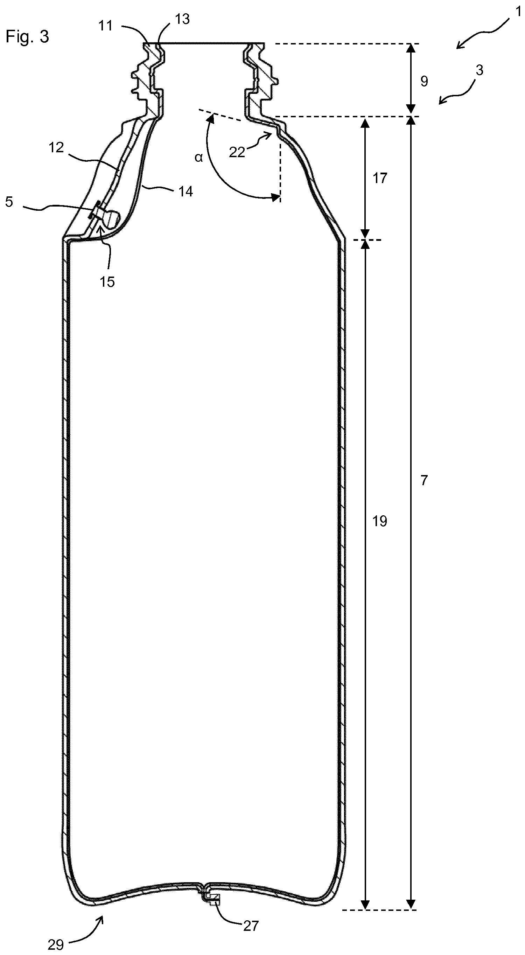

As shown in Fig. 3, the containing part 7 and opening 9 of the container body 3 each include an outer layer 11 and an inner layer 13. The outer layer 11 forms an outer shell 12, and the inner layer 13 forms an inner package 14. The inner layer 13 peels from the outer layer 11 with reductions in contents and thus the inner package 14 peels from the outer shell 12 and shrinks.

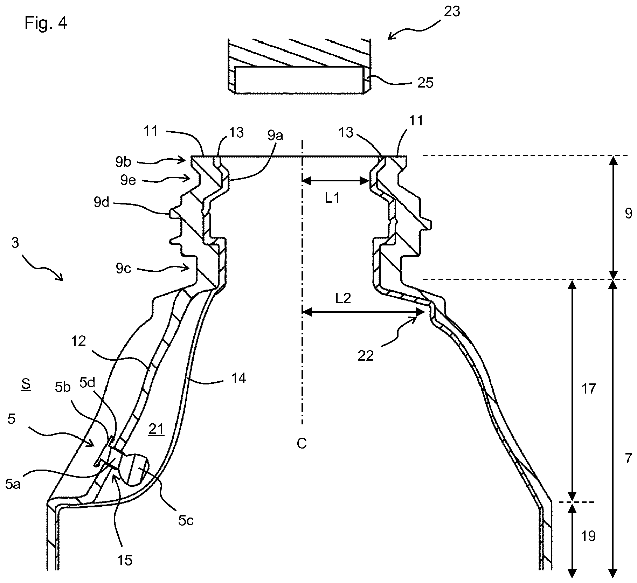

As shown in Fig. 4, the opening 9 is provided with male threads 9d. A cap, pump, or the like having female threads is mounted on the male threads 9d. Fig. 4 shows a part of a cap 23 having an inner ring 25. The outer diameter of the inner ring 25 is approximately the same as the inner diameter of the opening 9. As long as the outer surface of the inner ring 25 is in contact with a contact surface 9a of the opening 9, the leakage of contents is prevented. In the present embodiment, the front end of the opening 9 is provided with an expanded diameter part 9b having an inner diameter larger than that of a contact part 9e of the opening 9. Accordingly, the outer surface of the inner ring 25 does not contact the expanded diameter part 9b. If the opening 9 is not provided with the expanded diameter part 9b and if the inner diameter of the opening 9 is reduced even a bit due to manufacturing variations, there may occur a problem of the insertion of the inner ring 25 between the outer layer 11 and inner layer 13. On the other hand, if the opening 9 is provided with the expanded diameter part 9b, such a problem does not occur even if the inner diameter of the opening 9 varies somewhat.

The opening 9 is also provided with an inner layer support part 9c for suppressing the slip-down of the inner layer 13 in a position closer to the containing part 7 than the contact part 9e. The inner layer support part 9c is formed by forming a constriction in the opening 9. Even if the opening 9 is provided with the expanded diameter part 9b, the inner layer 13 may peel from the outer layer 11 due to the friction between the inner ring 25 and inner layer 13. In the present embodiment, even in this case, the slip-down of the inner layer 13 is suppressed by the inner layer support part 9c. Thus, the fall of the inner package 14 in the outer shell 12 can be suppressed.

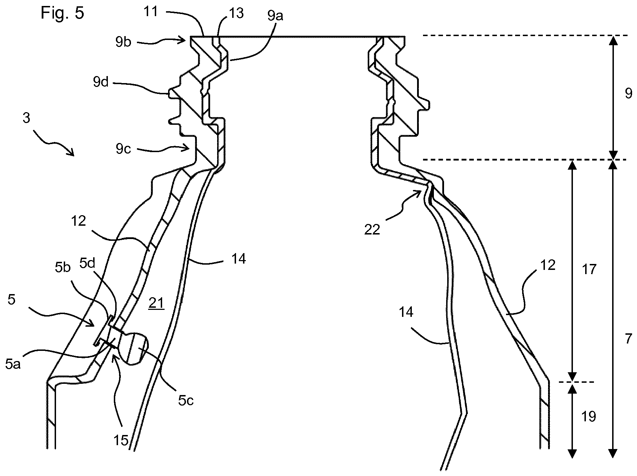

As shown in Figs. 3 to 5, the containing part 7 includes a body 19 whose cross-section in the length direction of the containing part has an approximately constant shape and a shoulder 17 connecting the body 19 and opening 9. The shoulder 17 is provided with a bend 22. The bend 22 is a part whose bend angle α shown in Fig. 3 is 140° or less and whose curvature radius inside the container is 4 mm or less. If the bend 22 is not provided, the peel of the inner layer 13 from the outer layer 11 may extend from the body 19 to the opening 9 and thus the inner layer 13 may peel from the outer layer 11 even in the opening 9. The peel of the inner layer 13 from the outer layer 11 in the opening 9 causes the fall of the inner package 14 in the outer shell 12 and therefore is not desirable. In the present embodiment, the bend 22 is provided; therefore, if the peel of the inner layer 13 from the outer layer 11 extends from the body 19 to the bend 22, the inner layer 13 is bent at the bend 22, as shown in Fig. 5, and thus the force peeling the inner layer 13 from the outer layer 11 is prevented from being transmitted to the area above the bend 22. As a result, the peel of the inner layer 13 from the outer layer 11 in the area above the bend 22 is suppressed. While the bend 22 is provided on the shoulder 17 in Figs. 3 to 5, the bend 22 may be provided on the boundary between the shoulder 17 and body 19.

The lower limit of the bend angle α is not limited to a particular angle, but is preferably 90° or more considering the ease of production. Similarly, the lower limit of the curvature radius is not limited to a particular length, but is preferably 0.2 mm or more considering the ease of production. To more reliably prevent the peel of the inner layer 13 from the outer layer 11 at the opening 9, the bend angle α is preferably 120° or less, and the curvature radius is preferably 2 mm or less. Specifically, the bend angle α is, for example, 90, 95, 100, 105, 110, 115, 120, 125, 130, 135, or 140°, or may be between any two of the values presented. Specifically, for example, the curvature radius is 0.2, 0.4, 0.6, 0.8, 1, 1.2, 1.4, 1.6, 1.8, or 2 mm, or may be between any two of the values presented.

As shown in Fig. 4, the bend 22 is disposed in a position such that the distance L2 from the central axis C of the container to the inner surface of the container at the bend 22 is 1.3 times or more as long as the distance L1 from the central axis C of the container to the inner surface of the container at the opening 9. The delamination container 1 of the present embodiment is formed by blow molding, and an increase in L2/L1 increases the blowing ratio of the bend 22 and thus reduces the thickness thereof. Accordingly, by setting L2/L1 to 1.3 or more, the thickness of the inner layer 13 at the bend 22 is sufficiently reduced; the inner layer 13 is more easily bent at the bend 22; and the peel from the inner layer 13 from the outer layer 11 at the opening 9 is more reliably prevented. L2/L1 is, for example, 1.3 to 3 and is preferably 1.4 to 2. Specifically, L2/L1 is, for example, 1.3, 1.4, 1.5, 1.6, 1.7, 1.8, 1.9, 2, 2.5, or 3, or may be between any two of the values prevented.

For example, the thickness at the opening 9 is 0.45 to 0.50 mm; the thickness at the bend 22 is 0.25 to 0.30 mm; and the thickness at the body 19 is 0.15 to 0.20 mm. By setting the thickness of the bend 22 to a sufficiently smaller size than that of the opening 9 as described above, the bend 22 fulfills the function thereof effectively.

As shown in Fig. 4, the containing part 7 is provided with the valve member 5 for adjusting the entry and exit of air between the outside space S of the container body 3 and the intermediate space 21 between the outer shell 12 and inner package 14. The outer shell 12 is provided with an outside air introduction hole 15 connecting the intermediate space 21 of the containing part 7 and the outside space S. The outside air introduction hole 15 is a through hole formed only in the outer shell 12 and does not reach the inner package 14. The valve member 5 includes an shaft 5a that is inserted in the outside air introduction hole 15 and can slide with respect to the outside air introduction hole 15, a cap 5c disposed on the intermediate space 21 side of the shaft 5a and has a larger cross-sectional area than the shaft 5a, and a locking part 5b that is disposed on the outside space S side of the shaft 5a and prevents the entry of the valve member 5 into the intermediate space 21.

The cap 5c is configured to substantially block the outside air introduction hole 15 when compressing the outer shell 12 and is shaped so that a portion thereof closer to the shaft 5a has a smaller cross-sectional area. The locking part 5b is configured to be capable of introducing air to the intermediate space 21 when the compressed outer shell 12 restores its original shape. When the outer shell 12 is compressed, the pressure in the intermediate space 21 exceeds the external pressure and thus the air in the intermediate space 21 leaks out from the outside air introduction hole 15. The cap 5c moves toward the outside air introduction hole 15 due to the pressure difference and the flow of air and blocks the outside air introduction hole 15. Since the cap 5c is shaped so that a portion thereof closer to the shaft 5a has a smaller cross-sectional area, it easily engages with the outside air introduction hole 15 to block the outside air introduction hole 15.

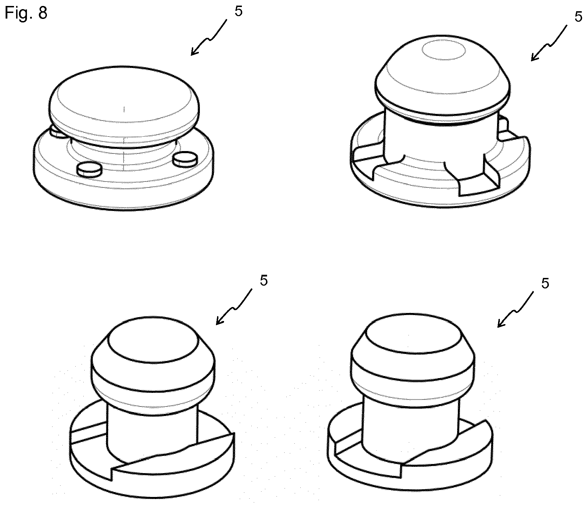

When the outer shell 12 is further compressed in this state, the pressure in the intermediate space 21 is further increased. As a result, the inner package 14 is compressed and discharges the contents thereof. When the compressing force applied to the outer shell 12 is released, the outer shell 12 attempts to restore its original shape by its elasticity. At this time, the cap 5c leaves the outside air introduction hole 15 and releases the blockage of the outside air introduction hole 15. Thus, outside air is introduced into the intermediate space 21. To prevent the locking part 5b from blocking the outside air introduction hole 15, a portion in contact with the outer shell 12, of the locking part 5b is provided with a protrusion 5d. Since the protrusion 5d is in contact with the outer shell 12, a gap is formed between the outer shell 12 and locking part 5b. Instead of the protrusion 5d, the locking part 5b may be provided with a groove so as to prevent the locking part 5b from blocking the outside air introduction hole 15. Specific examples of the configuration of the valve member 5 are shown in Fig. 8.

The valve member 5 can be mounted on the container body 3 by inserting the cap 5c into the intermediate space 21 in such a manner that the cap 5c expands the outside air introduction hole 15. For this reason, the front end of the cap 5c is preferably tapered. As seen above, the valve member 5 can be mounted on the container body 3 by simply pushing the cap 5c into the intermediate space 21. Thus, the productivity can be improved.

In mounting the valve member 5, the valve member 5 is mounted in a valve mounting recess 7a formed in the containing part 7 so as to prevent the valve member 5 from interfering with a shrink film with which the containing part 7 will be covered after mounting the valve member 5. Also, an air circulation groove 7b extending from the valve mounting recess 7a in a direction toward the opening 9 is formed so as to prevent the shrink film from sealing the valve mounting recess 7a.

Te valve mounting recess 7a is formed in the shoulder 17 of the outer shell 12. The shoulder 17 forms a slope, and a flat region FR is disposed in the valve mounting recess 7a. Since the flat region FR is disposed approximately in parallel with the slope formed by the shoulder 17, it also forms a slope. The outside air introduction hole 15 is formed in the slope formed by the flat region FR in the valve mounting recess 7a. If the outside air introduction hole 15 is formed, for example, in the vertical plane of the body 19, the inner package 14 which is once peeled may contact the valve member 5, thereby preventing the movement of the valve member 5. In the present embodiment, on the other hand, the outside air introduction hole 15 is formed in the slope; therefore, there is no such risk, and the smooth movement of the valve member 5 is ensured. The angle of the slope is not limited to a particular angle, but is preferably 45 to 89°, more preferably 55 to 85°, even more preferably 60 to 80°.

As shown in Fig. 1(c), the flat region FR in the valve mounting recess 7a is disposed over a width W of 3 mm or more (preferably 3.5 mm or 4 mm or more) from the outside air introduction hole 15. For example, if the outside air introduction hole 15 having a diameter of 4 mm is formed in the center of the flat region FR, the diameter of the valve mounting recess 7a is set to 10 mm or more. The upper limit of the width W of the flat region FR is not limited to a particular size. However, it is preferable that the width W not be too large. This is because an increase in the width W of the flat region FR increases the area of the valve mounting recess 7a, resulting in an increase in the area of the gap between the outer shell 12 and shrink film. The upper limit is, for example, 10 mm. Accordingly, the width W is, for example, 3 to 10 mm. Specifically, the width W is, for example, 3, 3.5, 4, 4.5, 5, 6, 7, 8, 9, or 10 mm, or may be between any two of the values presented.

An experiment performed by the present inventor indicated the following: as the flat region FR on the outer surface of the outer shell 12 is increased, the curvature radius of the inner surface of the outer shell 12 is increased; and if the flat region FR is disposed over a range of 3 mm or more from the outside air introduction hole 15 on the outer surface of the outer casing, the curvature radius of the inner surface of the outer shell 12 is sufficiently increased and thus the adhesion between the outer shell 12 and valve member 5 is improved. The curvature radius of the inner surface of the outer shell 12 is preferably 200 mm or more, more preferably 250 mm or more or 300 mm or more in a range of 2 mm from the outside air introduction hole 15. If the curvature radius is such a value, the inner surface of the outer shell 12 is substantially flattened, and the adhesion between the outer shell 12 and valve member 5 is improved.

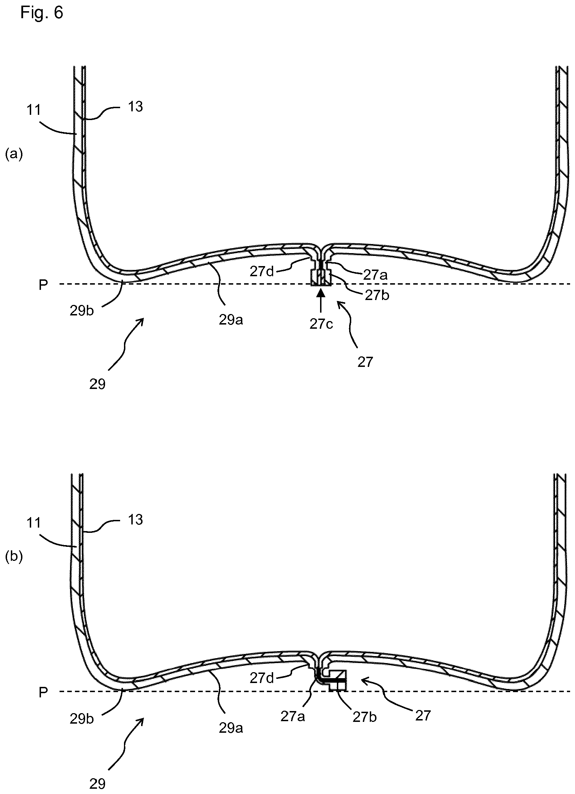

As shown in Fig. 1(b), the bottom 29 of the containing part 7 is provided with a central recessed region 29a and a peripheral region 29b disposed therearound. The central recessed region 29a is provided with a bottom sealing protrusion 27 protruding from the bottom 29. As shown in Figs. 6(a) and 6(b), the bottom sealing protrusion 27 is a sealing part of a blow-molded tubular multilayer parison including an outer layer 11 and an inner layer 13. The bottom sealing protrusion 27 includes a base 27d, a thin part 27a, and a thick part 27b which is thicker than the thin part 27a. These elements are disposed on the bottom 29 in this order.

Immediately after blow molding, the bottom sealing protrusion 27 is erected approximately perpendicular to a plane P defined by the peripheral region 29b, as shown in Fig. 6(a). If an impact is given to the container in this state, the inner layer 13 at a welding part 27c is easily split. That is, the impact resistance is insufficient. For this reason, in the present embodiment, by blowing hot air to the bottom sealing protrusion 27 after blow molding, the thin part 27a is softened and thus the bottom sealing protrusion 27 is bent at the thin part 27a, as shown in Fig. 6(b). As seen above, the impact resistance of the bottom sealing protrusion 27 is improved by performing a simple step of bending the bottom sealing protrusion 27. Also, as shown in Fig. 6(b), the bent bottom sealing protrusion 27 is configured not to protrude from the plane P defined by the peripheral region 29b. Thus, when the delamination container 1 is erected, the bottom sealing protrusion 27 is prevented from extending off the plane P and shaking the delamination container 1.

The base 27d, which is disposed closer to the bottom 29 than the thin part 27a and is thicker than the thin part 27a, need not necessarily be provided. However, the disposition of the thin part 27a on the base 27d can further improve the impact resistance of the bottom sealing protrusion 27.

As shown in Fig. 1(b), the recessed region of the bottom 29 is formed so as to cross the entire bottom 29 in the length direction of the bottom sealing protrusion 27. That is, the central recessed region 29a and peripheral recessed region 29c are connected together. According to this configuration, the bottom sealing protrusion 27 is easily bent.

Next, the layer configuration of the container body 3 will be described in more detail. The container body 3 includes the outer layer 11 and inner layer 13. The outer layer 11 is formed with a larger thickness than the inner layer 13 so as to increase the restorability thereof.

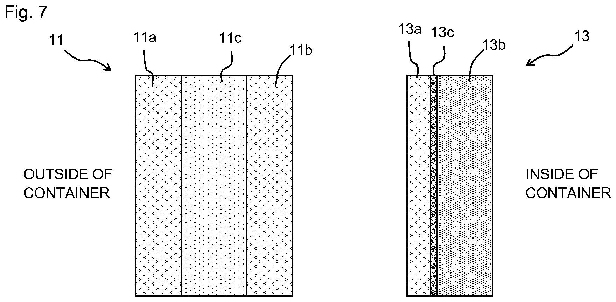

The outer layer 11 is formed of a polyolefin (e.g., as low-density polyethylene, linear low-density polyethylene, high-density polyethylene, polypropylene, ethylene-propylene copolymer, or a mixture thereof) or the like. The outer layer 11 consists of multiple layers, and at least the innermost layer thereof contains a lubricant. If the outer layer 11 consists of two layers, the layer closer to the inside of the container serves as the innermost layer, and the layer closer to the outside of the container serves as the outermost layer. Accordingly, at least of the innermost of these layers has to contain a lubricant. If the outer layer 11 consists of three layers, the layer closest to the inside of the container serves as the innermost layer, and the layer closest to the outside of the container serves as the outermost layer. As shown in Fig. 7, the outer layer 11 preferably includes a repro layer 11c between an innermost layer 11b and an outermost layer 11a. As used herein, the term "repro layer" refers to a layer formed by recycling burrs generated when a container is molded. Further, while the outer layer 11 consists of multiple layers, both the innermost and outermost layers preferably contain a lubricant. The amount of lubricant added is not limited to a particular amount and is, for example, 100 to 5000 ppm, preferably 500 to 3000 ppm.

The lubricant may be any type of commercially available common lubricant. The lubricant may be one of a hydrocarbon-based lubricant, a fatty acid-based lubricant, an aliphatic amide-based lubricant, a metal soap-based lubricant, and a combination of two or more thereof. Examples of the hydrocarbon-based lubricant include liquid paraffin, paraffin wax, and synthesized polyethylene wax. Examples of the fatty acid-based lubricant include stearic acid and stearyl alcohol. Examples of the aliphatic amide-based lubricant include fatty amides, such as stearamide, oleic amide, and erucic acid amide, and alkylene fatty amides, such as methylene bis(stearamide) and ethylene bis(stearamide). Examples of the metal soap-based lubricant include metal stearate. Examples of the commercially available lubricants include SUMIKATHENE A-10 (an oleic amide available from Sumitomo Chemical Company, Limited) and ESQ-4 (an erucic acid amide available from Prime Polymer Co., Ltd.).

The innermost layer of the outer layer 11 is a layer that is in contact with the inner layer 13. By adding a lubricant to the innermost layer of the outer layer 11, it is possible to improve the peelability of the inner layer 13 from the outer layer 11 and thus to improve the content dischargeability of the delamination container. On the other hand, the outermost layer of the outer layer 11 is a layer that contacts the mold when blow-molded. By adding a lubricant to the outermost layer of the outer layer 11, it is possible to improve the mold-releasability.

One or both of the innermost and outermost layers of the outer layer 11 can be formed of a random copolymer between propylene and another monomer. Thus, the shape restorability, transparency, and heat resistance of the outer shell 12 can be improved.

With respect to the random copolymer, the content of the monomer other than propylene is less than 50 mol%, preferably 5 to 35 mol%. Specifically, this content is, for example, 5, 10, 15, 20, 25, or 30 mol%, or may be between any two of the values presented. The monomer that is copolymerized with propylene may be of any type as long as it improves the impact resistance of the random copolymer compared to a homopolymer of polypropylene. Ethylene is particularly preferable. If the random copolymer between propylene and ethylene is used, the ethylene content is preferably 5 to 30 mol%. Specifically, the ethylene content is, for example, 5, 10, 15, 20, 25, or 30 mol%, or may be between any two of the values presented. The weight average molecular weight of the random copolymer is preferably 100,000 to 500,000, more preferably 100,000 to 300,000. Specifically, the weight average molecular weight is, for example, 100,000, 150,000, 200,000, 250,000, 300,000, 350,000, 400,000, 450,000, or 500,000, or may be between any two of the values presented.

The tensile modulus of the random copolymer is preferably 400 to 1600 MPa, more preferably 1000 to 1600 MPa. If the tensile modulus is in such a range, particularly good shape restorability is obtained. Specifically, the tensile modulus is, for example, 400, 500, 600, 700, 800, 900, 1000, 1100, 1200, 1300, 1400, 1500, or 1600 MPa, or may be between any two of the values presented.

If the container is excessively hard, the sense of use of the container is deteriorated. For this reason, a mixture obtained by mixing a flexible material, such as linear low-density polyethylene, with the random copolymer may be used. Preferably, the material mixed with the random copolymer is mixed so that the content is less than 50% by weight with respect to the entire mixture in order to prevent the effective properties of the random copolymer from being significantly impaired. For example, a mixture obtained by mixing the random copolymer and linear low-density polyethylene at a weight ratio of 85:15 may be used.

As shown in Fig. 7, the inner layer 13 includes an EVOH layer 13a disposed closer to the outside of the container, an inner surface layer 13b disposed closer to the inside of the container than the EVOH layer 13a, and a bonding layer 13c disposed between the EVOH layer 13a and inner surface layer 13b. The disposition of the EVOH layer 13a can improve the gas-barrier properties of the inner layer 13 and the peelability from the outer layer 11 thereof.

The EVOH layer 13a is formed of an ethylene-vinyl alcohol copolymer (EVOH) resin and is obtained by the hydrolysis of ethylene and a vinyl acetate copolymer. The ethylene content of the EVOH resin is, for example, 25 to 50 mol% and is preferably 32 mol% or less in terms of oxygen-barrier properties. The lower limit of the ethylene content is not limited to a particular content, but is preferably 25 mol% or more, since the flexibility of the EVOH layer 13a is more likely to decrease as the ethylene content decreases. Preferably, the EVOH layer 13a contains an oxygen absorbent. The EVOH layer 13a containing an oxygen absorbent can exhibit higher oxygen-barrier properties.

Since it is preferred to form the outside air introduction hole 15 in the outer layer 11 using a heating punch, it is preferred to make the melting point of the EVOH resin higher than that of the resin of which the outer layer 11 is formed. This is because by making the melting point of the EVOH resin higher than that of the resin from which the outer layer 11 is formed, the outside air introduction hole 15 formed in the outer layer 11 using a heating punch is prevented from reaching the inner layer 13. Preferably, the different between the melting point of EVOH and that of the resin from which the outer layer 11 is formed is larger. Specifically, the difference is preferably 15°C or more, particularly preferably 30°C or more. The melting point difference is, for example, 5 to 50°C. Specifically, it is, for example, 5, 10, 15, 20, 25, 30, 35, 40, 45, or 50°C, or may be between any two of the values presented.

The tensile modulus of the EVOH layer is preferably 2000 MPa or less, more preferably 1800 MPa or less. The reason is that the EVOH layer 5a having too high a tensile modulus is less likely to smoothly peel from the outer layer 3. The lower limit of the tensile modulus may be any value and is, for example, 1000 MPa. Specifically, the tensile modulus is, for example, 1000, 1100, 1200, 1300, 1400, 1500, 1600, 1700, 1800, 1900, or 2000 MPa, or may be between any two of the values presented.

The inner surface layer 13b is a layer that is in contact with the contents of the delamination container 1. For example, the inner surface layer 5b is formed of a polyolefin, such as low-density polyethylene, linear low-density polyethylene, high-density polyethylene, polypropylene, ethylene-propylene copolymer, or a mixture thereof. Preferably, it is formed of low-density polyethylene or linear low-density polyethylene. The tensile modulus of the resin from which the inner surface layer 13b is formed is preferably 50 to 300 MPa, more preferably 70 to 200 MPa. If the tensile modulus is in such a range, the inner surface layer 13b is particularly flexible. Specifically, the tensile modulus is, for example, 50, 100, 150, 200, 250, or 300 MPa, or may be between any two of the values presented.

The bonding layer 13c has the function of bonding the EVOH layer 13a and inner surface layer 13b together. The bonding layer 5c is formed of, for example, a compound obtained by adding an acid-modified polyolefin (e.g., maleic anhydride-modified polyethylene) obtained by introducing carboxyl to the above polyolefin, or ethylene-vinyl acetate copolymer (EVA). One example of the bonding layer 13c is a mixture of low-density polyethylene or linear low-density polyethylene and acid-modified polyethylene.

Next, an example of a method for producing the delamination container 1 of the present embodiment will be described.

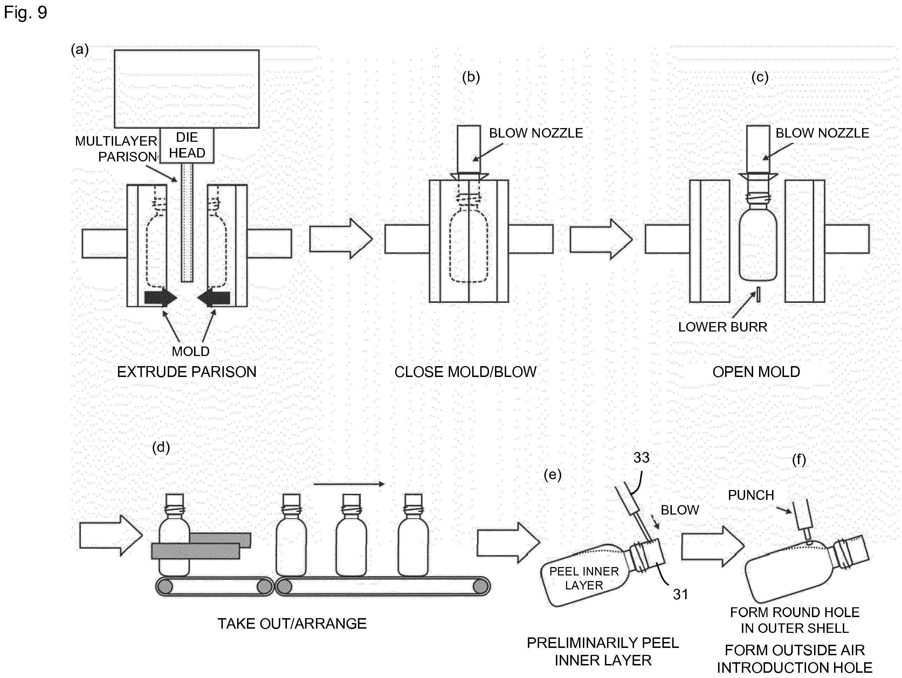

First, as shown in Fig. 9(a), a molten multilayer parison having a multilayer structure (for example, a multilayer structure including PE layer/bonding layer/EVOH layer/PP layer/repro layer/PP layer; the order of the layers presented is the descending order of the proximity to the inside of the container) corresponding to a container body 3 to be produced is extruded and set in a split mold for blow molding and then the split mold is closed.

Then, as shown in Fig. 9(b), a blow nozzle is inserted into an opening close to an opening 9, of the container body 3, and air is blown into the cavity of the split mold with the mold closed.

Then, as shown in Fig. 9(c), the split mold is opened, and the blow-molded product is taken out. The split mold has a cavity shape such that the shapes of the parts of the container body 3, such as the valve mounting recess 7a, air circulation groove 7b, and bottom sealing protrusion 27, are formed in a blow-molded product. The split mold also has a pinch-off part under the bottom sealing protrusion 27, and a lower burr formed under the bottom sealing protrusion 27 is eliminated using the pinch-off part.

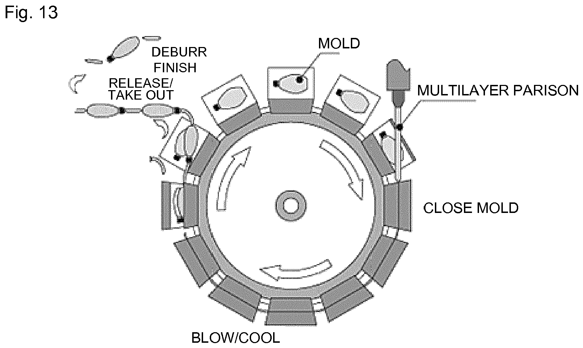

Among available blow molding methods is rotary blow molding. Rotary blow molding is a molding method including continuously feeding a molten multilayer parison onto several to dozen molds arranged concentrically while sequentially moving the molds, sequentially closing the molds after feeding the multilayer parison, and blowing air into the parison, as shown in Fig. 13. If a delamination container is produced by rotary blow molding, the delamination container has a relatively high temperature and is warm at the time point when it is taken out. For this reason, if the delamination container is inadequately released from the mold, unintended deformation (e.g., the peel deformation of the inner bag) may occur in the delamination container and affect the dischargeability. However, if the outermost layer of the outer layer 11 contains a lubricant to improve the mold-releasability, the content dischargeability of the delamination container can be improved.

Then, as shown in Fig. 9(d), the taken-out blow-molded products are arranged.

Then, as shown in Fig. 9(e), a hole is formed only in the outer layer 11 of an upper tubular part 31 disposed over the opening 9, and air is blown between the outer layer 11 and inner layer 13 using a blower 33. Thus, the inner layer 13 is preliminarily peeled from the outer layer 11 in an area in which the valve member 5 is to be mounted (a valve mounting recess 7a), of the containing part 7. By performing this preliminary peeling step, a step of forming an outside air introduction hole 15 and a step of inserting a valve member 5 are easily performed. To prevent the leakage of the blown air from the front end of the upper tubular part 31, the front end of the upper tubular part 31 may be covered with a cover member. To make it easy to form a hole only in the outer layer 11, the inner layer 13 may be peeled from the outer layer 11 at the upper tubular part 31 by crushing the upper tubular part 31 before forming a hole. The preliminary peel may be performed on all or part of the containing part 7.

Then, as shown in Fig. 9(f), an outside air introduction hole 15 is formed in the outer shell 12 using a punch. The outside air introduction hole 15 is preferably a round hole, but may be shaped otherwise.

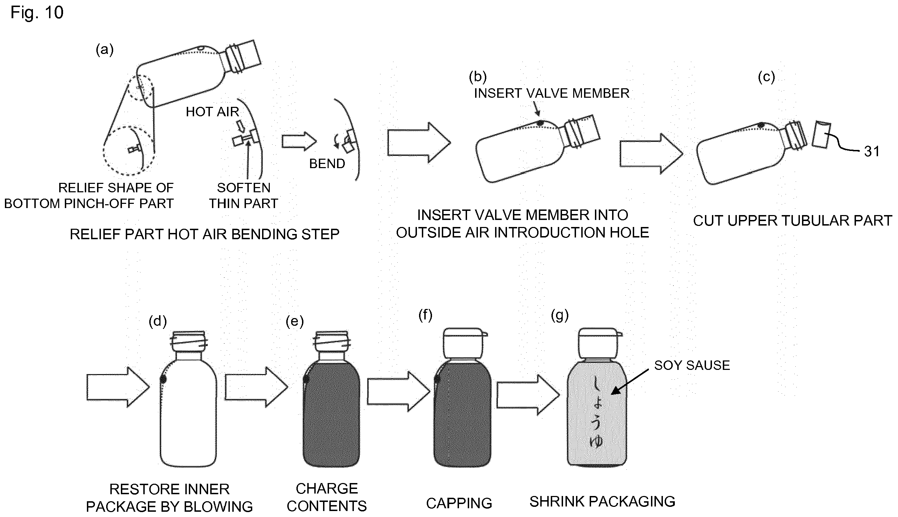

Then, as shown in Fig. 10(a), a bottom sealing protrusion 27 is bent by applying hot air to the bottom sealing protrusion 27 and thus softening a thin part 27a.

Then, as shown in Fig. 10(b), the valve member 5 is inserted into the outside air introduction hole 15.

Then, as shown in Fig. 10(c), the upper tubular part 31 is cut.

Then, as shown in Fig. 10(d), an inner package 14 is swelled by blowing air into the inner package 14.

Then, as shown in Fig. 10(e), contents are charged into the inner package 14.

Then, as shown in Fig. 10(f), a cap 23 is mounted on the opening 9.

Then, as shown in Fig. 10(g), the containing part 7 is covered with a shrink film, thereby completing a product.

The order of the steps described above may be changed as necessary. For example, the hot air bending step may be performed before the outside air introduction hole formation step or before the inner layer preliminary peeling step. The step of cutting the upper tubular part 31 may be performed before inserting the valve member 5 into the outside air introduction hole 15.

The inner layer preliminary peeling and outside air introduction hole formation step may be performed in the following manner.

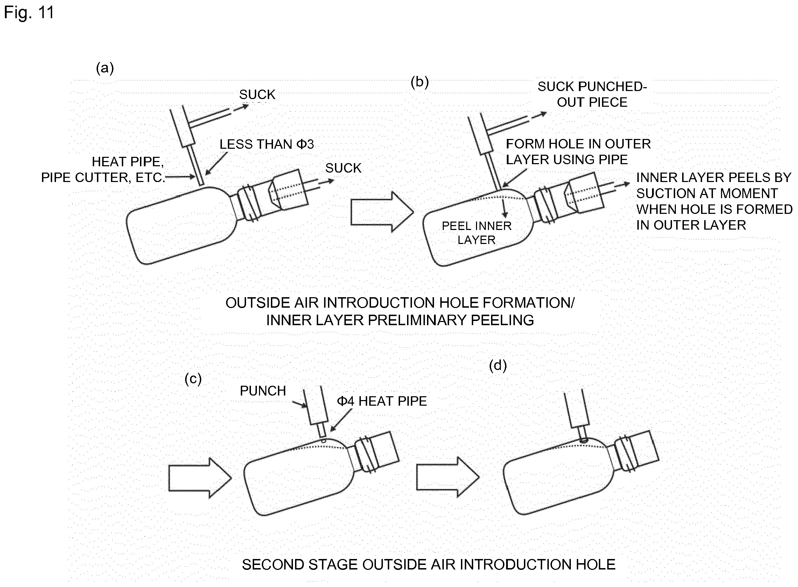

First, as shown in Fig. 11(a), the pressure in the inner package 14 is reduced by sucking air in the inner package 14 through the opening 9. In this state, a punch such as a heat pipe or pipe cutter is slowly pressed against the outer layer 11. This punch includes a tubular cutter and sucks the air in the tube. Unless a hole is formed in the outer layer 11, air does not enter between the outer layer 11 and inner layer 13 and therefore the inner layer 13 is not peeled from the outer layer 11.

When the tubular cutter penetrates through the outer layer 11, the punched-out piece is removed through the tubular cutter, and an outside air introduction hole 15 is formed, as shown in Fig. 11(b). At this moment, air enters between the outer layer 11 and inner layer 13, and the inner layer 13 is peeled from the outer layer 11.

Then, as shown in Fig. 11(c), the diameter of the outside air introduction hole 15 is expanded using a punch. Note that if a sufficiently large outside air introduction hole 15 to insert the valve member 5 is formed in the steps shown in Figs. 11(a) and 11(b), the diameter expansion step shown in Fig. 11(c) is not required.

Next, the operation principles when using the produced product will be described.

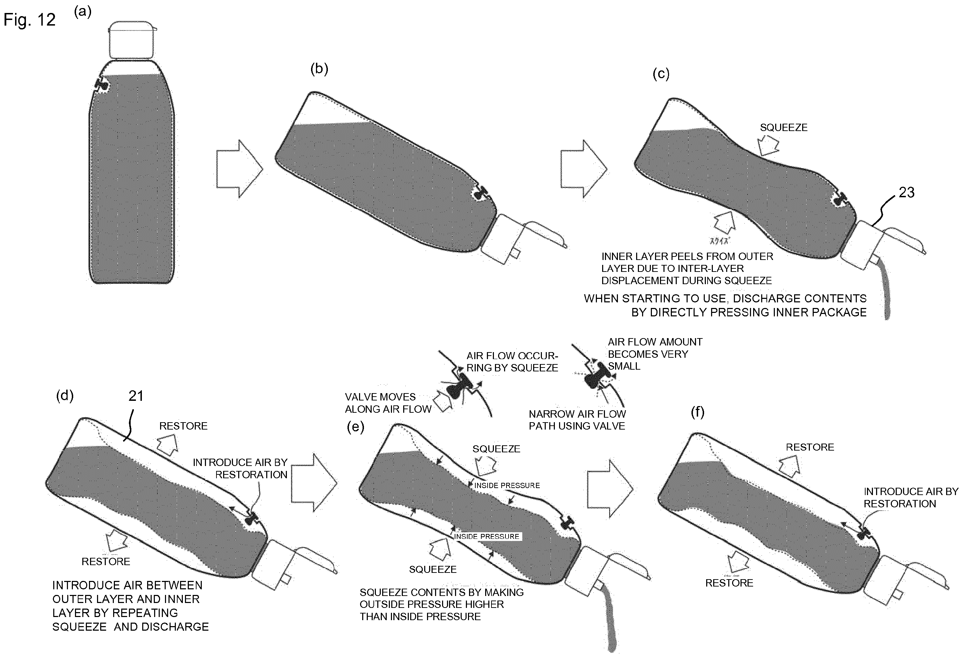

As shown in Fig. 12(a) to 12(c), the user discharges the contents charged in the product by inclining the product and grapping the side of the outer shell 12 to compress it. When the user starts to use the product, there is substantially no gap between the inner package 14 and outer shell 12. Accordingly, the compressing force applied to the outer shell 12 serves as the compressing force on the inner package 14 as it is. Thus, the inner package 14 is compressed, so that the contents are discharged.

The cap 23 includes a check valve (not shown). While the cap 23 allows the contents of the inner package 14 to be discharged, it does not allow outside air to be taken into the inner package 14. For this reason, the user eliminates the compressing force applied to the outer shell 12 after discharging the contents and thus the outer shell 12 attempts to restore its original shape by its own resilience. At this time, the outer shell 12 alone is swelled with the inner package 14 deflated. As shown in Fig. 12(d), the pressure is reduced in the intermediate space 21 between the inner package 14 and outer shell 12, and outside air is introduced into the intermediate space 21 through the outside air introduction hole 15 formed in the outer shell 12. As long as the pressure is reduced in the intermediate space 21, the cap 5c is not pressed against the outside air introduction hole 15 and therefore does not hamper the introduction of outside air. The locking part 5b is provided with air passage ensuring means such as the protrusion 5d or groove in order to prevent the locking part 5b from hampering the introduction of outside air even with the locking part 5b in contact with the outer shell 12.

Then, as shown in Fig. 12(e), when the user compresses the outer shell 12 again by gripping the side of the outer shell 12, the cap 5c blocks the outside air introduction hole 15. Thus, the pressure in the intermediate space 21 is increased, and the compressing force applied to the outer shell 12 is transmitted to the inner package 14 through the intermediate space 21. The inner package 14 is compressed by this force and discharges the contents.

Then, as shown in Fig. 12(f), when the compressing force applied to the outer shell 12 is eliminated after discharging the contents, the outer shell 12 restores its original shape by its own resilience while introducing outside air to the intermediate space 21 through the outside air introduction hole 15.

### Examples

In Examples below, various delamination containers having different layer configurations were produced by blow molding, and the resulting containers were evaluated for the dischargeability.

### <Example 1>

In Example 1, the following layers were formed: lubricant-containing r-PP (random copolymer) layer (710 µm)/flexibility EVOH layer (thickness 60 µm)/bonding layer (thickness 60 µm)/LLDPE (linear low-density polyethylene) layer (thickness 70 µm). The order of the layers presented is the descending order of the proximity to the outside of the container. The lubricant-containing r-PP layer was an outer layer, and the other layers are inner layers. To the r-PP layer was added 1000 ppm of a lubricant formed of oleic amide (SUMIKATHENE A-10 available from Sumitomo Chemical Company, Limited). The flexible EVOH layer was formed of an EVOH resin (SF7503B available from Nippon Synthetic Chemical Industry Co., Ltd.). The bonding layer was formed by mixing LLDPE and acid-modified polyethylene at a mass ratio of 50:50.

<Example 2>

Example 2 was the same as Example 1 except that the position of the lubricant-containing r-PP layer was changed as seen in r-PP layer (thickness 190 µm)/repro layer (thickness 470 µm)/lubricant-containing r-PP layer (thickness 50 µm). The order of the layers presented is the descending order of the proximity to the outside of the container. The type of the lubricant and the amount thereof added were the same as those of Example 1.

### <Example 3>

Example 3 was the same as Example 1 except that the lubricant-containing r-PP layer was changed to a lubricant-containing LDPE (low-density polyethylene) layer. The type of the lubricant and the amount thereof added were the same as those of Example 1.

The delamination containers of Examples 1 to 3 all exhibited excellent dischargeability compared to those containing no lubricant.

### Description of Reference Signs

1: delamination container, 3: container body, 5: valve member, 7: containing part, 9: opening, 11: outer layer 11, 12: outer casing, 13: inner layer, 14: inner package 14, 15: outside air introduction hole, 23: cap 23, 27: bottom sealing protrusion

## Claims

1. A delamination container (1) comprising:
an outer layer (11); and
an inner layer (13), wherein
the inner layer (13) is adapted to peel from the outer layer (11) and to shrink with reductions in contents,
the outer layer (11) consists of a plurality of layers (11a, 11b, 11c), and
an innermost layer (11b) of the outer layer (11) contains a lubricant.

2. The delamination container (1) of Claim 1, wherein
the outer layer (11) comprises a repro layer (11c) between the innermost and outermost layers (11a, 11b).

3. The delamination container (1) of Claim 1 or 2, wherein
an outermost layer (13a) of the inner layer (13) is formed of an EVOH resin.

4. A method for producing the delamination container (1) of any one of Claims 1 to 3, comprising
a step of extruding a molten multilayer parison having a multilayer structure corresponding to a layer configuration of the delamination container (1) and molding the molten multilayer parison by rotary blow molding, wherein
an outermost layer (11a) of the outer layer (11) contains the lubricant.

## Patentansprüche

1. Delaminierungsbehälter (1), umfassend:
eine äußere Schicht (11); und
eine innere Schicht (13), wobei
die innere Schicht (13) dazu angepasst ist, bei Reduzierung des Inhalts sich von der äußeren Schicht (11) abzulösen und zu schrumpfen,
die äußere Schicht (11) aus einer Mehrzahl von Schichten (11a, 11b, 11c) besteht, und
eine innerste Schicht (11b) der äußeren Schicht (11) ein Schmiermittel enthält.

2. Delaminierungsbehälter (1) nach Anspruch 1, wobei
die äußere Schicht (11) eine Repro-Schicht (11c) zwischen den innersten und den äußersten Schichten (11a, 11b) umfasst.

3. Delaminierungsbehälter (1) nach Anspruch 1 oder 2, wobei eine äußerste Schicht (13a) der inneren Schicht (13) aus einem EVOH-Harz gebildet ist.

4. Verfahren zur Herstellung des Delaminierungsbehälters (1) nach einem der Ansprüche 1 bis 3, umfassend
einen Schritt des Extrudierens eines geschmolzenen Mehrschichtvorformlings, der eine Mehrschichtstruktur aufweist, die einer Schichtkonfiguration des Delaminierungsbehälters (1) entspricht, und Formens des geschmolzenen Mehrschichtvorformlings durch drehende Blasformung, wobei
eine äußerste Schicht (11b) der inneren Schicht (11) das Schmiermittel enthält.

## Revendications

1. Récipient à délamination (1) comprenant :
une couche extérieure (11) ; et
une couche intérieure (13), dans lequel
la couche intérieure (13) est conçue pour se décoller de la couche extérieure (11) et pour rétrécir avec réductions du contenu,
la couche extérieure (11) consiste en une pluralité de couches (11a, 11b, 11c), et
une couche la plus intérieure (11b) de la couche extérieure (11) contient un lubrifiant.

2. Récipient à délamination (1) selon la revendication 1, dans lequel
la couche extérieure (11) comprend une couche reproduite (11c) entre la couche la plus intérieure et la couche la plus extérieure (11a, 11b).

3. Récipient à délamination (1) selon la revendication 1 ou 2, dans lequel
une couche la plus extérieure (13a) de la couche intérieure (13) est formée d'une résine EVOH.

4. Procédé pour produire le récipient à délamination (1) selon l'une quelconque des revendications 1 à 3, comprenant :
une étape d'extrusion d'une paraison multicouche fondue ayant une structure multicouche correspondant à une configuration de couches du récipient à délamination (1) et le moulage de la paraison multicouche fondue par moulage par soufflage rotatif,
une couche la plus extérieure (11a) de la couche extérieure (11) contenant le lubrifiant.
